# EUROPEAN PATENT SPECIFICATION

(11) **EP 1 733 285 B1**
(45) Date of publication and mention of the grant of the patent: **24.01.2018**
(21) Application number: 04750394.1
(22) Date of filing: 21.04.2004
(51) Int. Cl.: G05D 1/00

(54) **AIRCRAFT AUTORECOVERY SYSTEMS AND METHODS**
SELBSTRÜCKGEWINNUNGSSYSTEM UND -VERFAHREN FÜR EIN FLUGZEUG
SYSTEMES ET PROCEDES DE RECUPERATION AUTOMATIQUE POUR AERONEF

(30) Priority: 19.02.2004 US 782055
(43) Date of publication of application: 20.12.2006
(73) Proprietor: Honeywell International Inc., Morris Plains, NJ 07950 (US)
(72) Inventor: BATEMAN, Charles, D., Bellevue, WA 98008 (US); JOHNSON Steven, C., Issaquah, WA 98029 (US); GLOVER, John, H., Bellevue, WA 98004 (US)
(74) Representative: Houghton, Mark Phillip
(86) International application number: PCT/US2004/012235
(87) International publication number: WO 2005/083540

(56) References cited:
- US-A- 4 224 669
- US-A- 4 924 401
- US-A- 6 088 654
- US-A1- 2003 034 902
- US-B1- 6 356 819
- US-B1- 6 675 076

## Description

### FIELD OF THE INVENTION

This invention relates generally to aircraft safety and, more specifically, to methods and systems for automatic recovery of hazardous maneuvers.

### BACKGROUND OF THE INVENTION

An obvious intent of any automatic recovery system for almost any aircraft is to prevent ground impact during controlled flight of the aircraft. Many aircraft have standard proximity alarms for alerting pilots to the nearness of ground. These alarms can be based on inadmissible rates of descent of the aircraft or nearness of the ground. While proximity alarms are an improvement over prior systems, they are not a permanent solution to some of the problems that have been shown to cause aircraft ground impacts.

The need for ground collision avoidance extends to a wide variety of aircraft and scenarios ranging from terminal area navigation for commercial airliners to low level navigation, pilot spatial disorientation and g-induced loss of consciousness (G-LOC) for high performance aircraft. While some aircraft have been equipped with ground proximity warning systems. Most of the existing ground proximity warning systems contain no provisions for variations in aerodynamics, but rather rely on the pilot to compensate for these variations by giving him a finite amount of time to recover level flight. At the same time, these systems are passive, relying on pilot awareness and competence to recover from the situation.

Thus, two essential problems remain with proximity warning systems. Firstly, if the pilot or crew is incapacitated, as might occur due to loss of cabin pressure after a bird strike through the cockpit windshield, for example, pilot awareness or ability may not be up to the task of controlling the aircraft and recovering level flight.

An innovative approach to this problem is disclosed in U.S. Pat. No. 4,058,710 to Altman. Altman discloses a process for preventing unwanted contact by an aircraft with land or water. When applied over land the Altman assumes flat terrain or low hills. Altman's process utilizes the aircraft's rate of descent and altitude to compute a limiting altitude, which is further modified by the aircraft's ability for transverse acceleration. This limiting altitude is used to determine when to activate an automatic feedback controller, which provides the aircraft with the maximum feasible transverse acceleration. Thus, Altman attempts to continuously calculate a limiting altitude for the aircraft below which automatic controls will be applied for aircraft recovery. Various theoretical schemes are proposed by Altman for determining this limiting altitude. All of these schemes are difficult to incorporate into an aircraft control design or to simplify in a manner that will not cause spurious effects including nuisance flyups during controlled flight.

The current Enhanced Ground Proximity Warning System (EGPWS) is designed to provide pilots with timely alerts in the event that the airplane is flown towards terrain or an obstacle. The EGPWS alerting algorithms are predicated on the expectation that the response of the pilot to a warning will be a "pull-up", i.e. a maneuver in the vertical plane only. If an aircraft is about to enter restricted airspace, it may not be possible to avoid the airspace by using a "pull-up" maneuver alone. Also, some airspace volumes expand laterally with altitude, and again a "pull-up" will not avoid penetrating the airspace volume. A need therefore exists for a ground and obstacle collision and protected airspace auto-recovery system that is sufficiently sophisticated to initiate a recovery maneuver when required while avoiding a multitude of nuisance recoveries that interfere with controlled flight and providing smooth recovery maneuvers for crew and passenger safety and comfort. Other prior art systems can be found disclosed in US4924401 and US6356819.

### SUMMARY OF THE INVENTION

The present invention provides methods and systems for performing auto-recovery for an aircraft: An aircraft auto recovery method comprising:
receiving one of a caution alert or a warning alert from a warning system; waiting a predefined period of time for positive flight control input by the flight crew; and, the method characterised by:
   initiating auto-recovery if no positive flight control input has been performed at time of expiration of the waiting period, wherein initiating auto-recovery includes increasing flight path angle by 2° if a caution alert is received, wherein initiating auto-recovery includes increasing flight path angle by an additional 2° if the caution alert remains after expiration of an additional waiting period.

A system for performing auto-recovery for an aircraft, the system comprising:
aircraft position and information systems;
an automatic flight control system;
memory comprising terrain data, airport data, obstacle data, protected airspace data and an auto-recovery computer program product; and
a processor coupled to the memory, the position and information systems, and the automatic flight control system, the processor comprising:
   a component for determining if one of a caution alert or a warning alert exists based on data stored in the memory and information received from the position and information systems; and
   a component for generating an auto-recovery instruction and sending the generated auto-recovery instruction to the automatic flight control system if no positive flight control input has been performed at time of expiration of a waiting period, wherein the component for generating an auto-recovery instruction includes a component for analyzing two or more auto-recovery routes relative to one or more of the terrain data, airport data, obstacles data, or protected airspace data.

### BRIEF DESCRIPTION OF THE DRAWINGS

The preferred and alternative embodiments of the present invention are described in detail below with reference to the following drawings.
FIGURE 1 is a block diagram of an exemplary system formed in accordance with the present invention;
FIGURE 2 illustrates a flow diagram performed by an auto-recovery component of the system shown in FIGURE 1;
FIGURES 3-5 illustrate example data results of this aircraft information of an aircraft undergoing auto-recovery using the system shown in FIGURE 1;
FIGURE 6 illustrates a graphical representation of warning altitude geometric values generated in accordance with the present invention;
FIGURE 7 illustrates a flow diagram of an alternate embodiment process performed by the system shown in FIGURE 1;
FIGURES 8 and 9 are perspective views of protected airspace volumes;
FIGURE 10 is a top view of a multi-polygonal protected airspace volume;
FIGURES 11 and 12 are illustrative examples of avoidance calculations with respect to different protected airspace volumes; and
FIGURE 13 is block diagram of an exemplary system formed in accordance with an alternate embodiment of the present invention.

### DETAILED DESCRIPTION OF THE PREFERRED EMBODIMENT

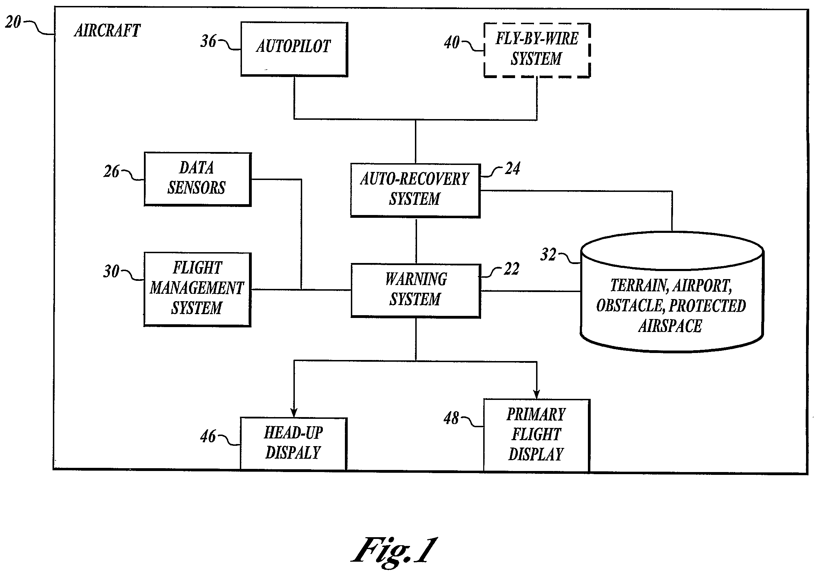

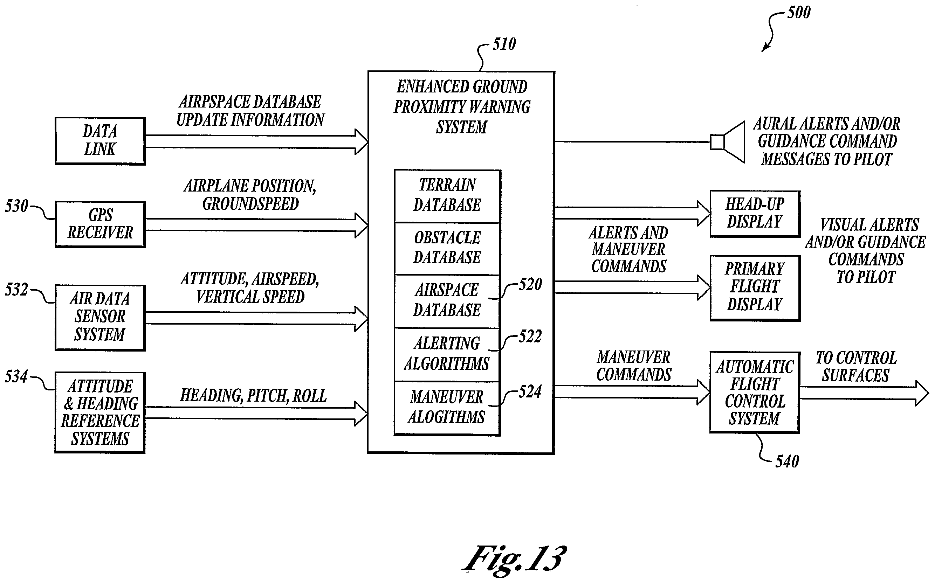

As shown in FIGURE 1, an aircraft 20 includes a warning system 22 coupled to an auto-recovery system 24. The warning system 22, such as the Enhanced Ground Proximity Warning System (EGPWS) produced by Honeywell, Inc., is coupled to various aircraft data sensors 26, and a Flight Management System (FMS) 30 or similar flight information systems. An example of a warning system 22 is a ground proximity warning system as shown and described in U.S. Patent No. 5,839,080 titled Terrain Awareness System. The warning system 22 is also coupled to a database 32 that may include one or more of a terrain database, an airport database, an obstacle database, and a protected airspace database. The auto-recovery system 24 is also coupled to an autopilot 36 or in an alternate embodiment to a fly-by-wire system 40. An alternate embodiment of the present invention is shown below in FIGURE 13.

In one embodiment of the invention, the auto-recovery system 24 sends flight control commands, such as pitch or roll commands, to the autopilot 36 after some predefined period of time has elapsed since a caution or warning has been identified by the warning system 22. In another embodiment, an integrity flag is received at the auto-recovery system 24 from the warning system 22. The integrity flag indicates either high integrity or low integrity. If low integrity is indicated, the auto-recovery system 24 will not perform any auto-recovery maneuvers. However, if the integrity flag is set high, the auto-recovery system 24 will execute auto-recovery if an auto-recovery exists (warning or caution).

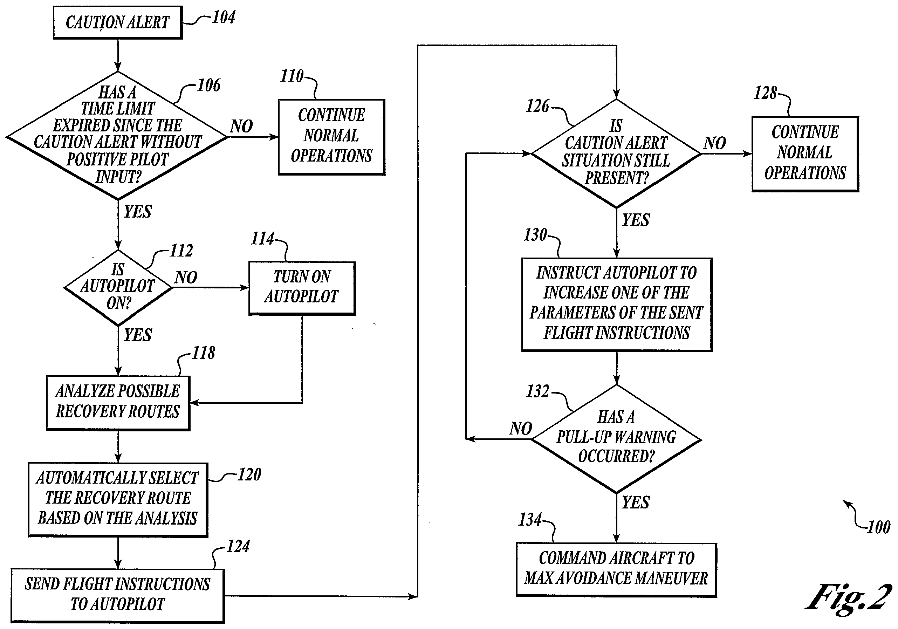

In another embodiment, after a caution or warning has been identified and outputted by the warning system 22, the auto-recovery system 24 analyzes a plurality of escape routes, selects the best escape route, and sends corresponding pitch and roll commands to the autopilot 36. This is described in more detail below with respect to the flow diagram of FIGURE 2.

The auto-recovery system 24 may be a separate general-purpose computer system that includes internal memory and a processing device that executes an auto-recovery application program stored within the memory or may be implemented as software within the warning system 22 (FIGURE 13).

FIGURE 2 illustrates a flow diagram of an exemplary process 100 performed by the auto-recovery system 24. First, the process 100 begins when a caution alert is outputted by the warning system 22, see block 104. At decision block 106, the auto-recovery system 24 waits until a time limit has expired since the caution alert has been identified without any positive flight control input by the pilots. A time limit or delay may be set at any value as determined by aircraft operations or preset by the manufacturer of the auto-recovery system 24. A time limit between 3-5 seconds allows for pilot reaction time without ignoring the impending hazard. If the pilots have positively responded to the caution alert, then aircraft operates as normal, see block 110. A non-positive pilot response includes a lack of response or an incorrect response. In other words, the functions of the auto-recovery system 24 are not needed. If no positive pilot action occurred and the time limit has expired, the auto-recovery system 24 instructs the autopilot 36 to turn on, if the autopilot is not already on, see decision block 112 and block 114. At block 118, the auto-recovery system 24 analyzes possible recovery routes. Examples of possible recover routes include the following:
a) roll wings level, pull-up
b) left turn 15°
c) right turn 15°
d) left turn 30°
e) right turn 30°
f) any of b-e with a pull-up

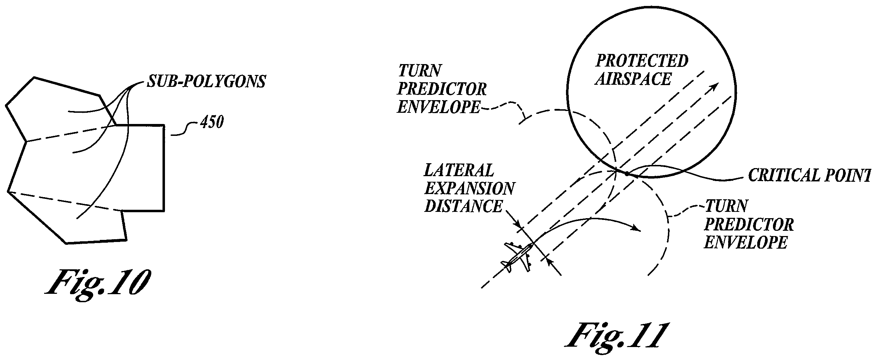

Other examples of different recovery routes are described in more detail below by example with regards to FIGURES 11-12.

At block 120, the auto-recovery system 24 automatically selects either the recovery route analyzed to have the best climb gradient or, if the recovery routes are analyzed sequentially, the first recovery route that is found to put the aircraft 20 in a trajectory that would clear the aircraft 20 of the impending hazard (ground, obstacle, protected airspace) is selected. Next, at block 124, the auto-recovery system 24 determines the proper flight instructions to give to the autopilot and then sends the flight instructions to the autopilot 36. Examples of the flight instructions that the auto-recovery system 24 sends to the autopilot 36 include pitch and roll commands, an airspeed value, flight path angle, or other instructions for directing the aircraft 20. If no caution alert is present after a set amount of time has passed since the auto-recovery system 24 has instructed the autopilot 36, decision block 126, normal operations of the aircraft resume, see block 128. If the caution alert is still present, then, at block 130, the auto-recovery system 24 instructs the autopilot to increase one or more of the flight instruction parameters that were sent to the autopilot 36. The decision at block 126 and the step at block 130 repeat, thereby increasing certain parameters such as flight path angle, until the pilot takes positive control of the aircraft or it is determined at decision block 132, that a warning has been identified by the warning system 22. If a warning has been identified, then at block 134 the auto-recovery system 24 instructs the autopilot 36 to perform maximum allowed avoidance maneuver. In one embodiment, maximum allowed maneuver is a six-degrees nose-level climb.

In one embodiment, the process 100 is performed or continued as long as the warning system 22 generates a high integrity flag. If a low integrity flag is sent from the warning system 22 to the auto-recovery system 24, the auto-recovery system 24 will not send flight control instructions to the autopilot 36 or fly-by-wire system 40. When the integrity flag is set high, the information that the warning system 22 uses to analyze aircraft proximity to the ground, obstacles, and protected airspace is of an acceptable standard. The acceptable standard ensures that when a caution or warning signal is identified, a false alert condition is highly unlikely. The caution or warning signal is highly accurate and that an auto-recovery initiated by the auto-recovery system 24 is an accurate response.

It will be appreciated that various types of flight instructions may be sent from the auto-recovery system 24 to the autopilot 36 or fly-by-wire system 40 depending upon the desired auto-recovery maneuver. For example, if the auto-recovery system 24 is designed for use in a commercial aircraft, then the flight instructions that are sent to the autopilot 36 are preferably not going to cause drastic maneuvers that would cause alarm or injury to passengers or crew that are not seated with a seatbelt. In the present invention, the pitch instruction that is sent to the autopilot 36 is a 2° nose-up pitch instruction. And at block 130, the increase is another 2° increase. These increases are designed to be effective but gradual and not to present large G-forces that are felt by the passengers.

With regard to the maximum allowed avoidance maneuver that occurs after a warning in a commercial aircraft, speed is preferably kept constant while the maneuver occurs. However, the instructions sent to the autopilot may be one that trades speed for altitude. In other words, a pitch instruction is so great that it causes a decrease in airspeed. One effective use of trading airspeed for altitude is when it is desirable to put the aircraft in a position that it reaches or nearly reaches its stall speed in order to produce the maximum amount of climb possible without causing the aircraft to depart stable flight.

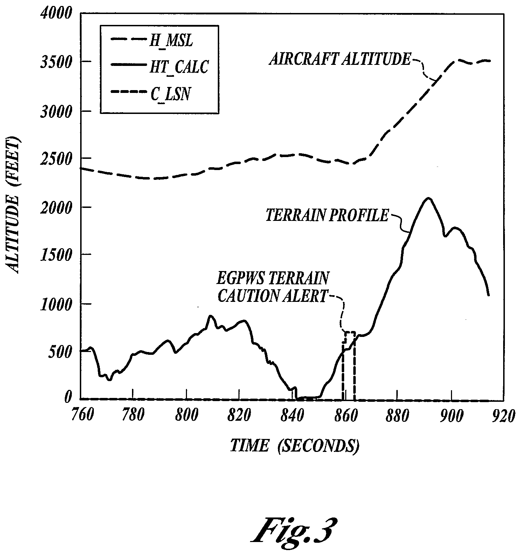

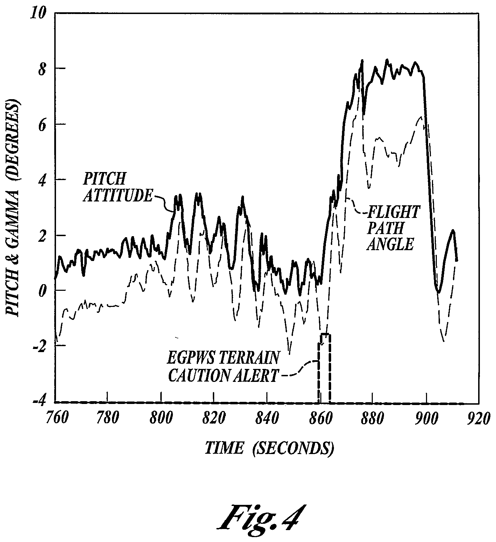

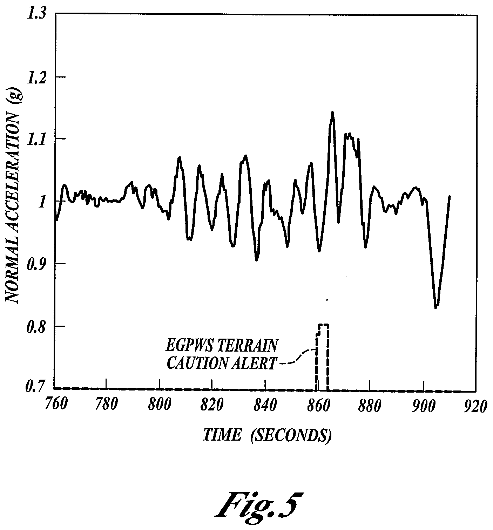

FIGURES 3-5 illustrate graphs showing data of a flight test of an aircraft implemented with the auto-recovery system 24 of the present invention. As shown in FIGURE 3, caution alerts occur for an aircraft traveling at approximately 762m (2,500 feet) as it approaches a terrain feature that extends higher than 609,6 m (2000 feet) as indicated by the terrain profile line. After the caution alert and no positive input by the pilot, the auto-recovery system 24 maneuvers the aircraft to a higher altitude. As shown in FIGURE 4, the flight path angle of the aircraft is altered after the caution alert in order for the aircraft to gain altitude. The pitch attitude is also shown in FIGURE 4. FIGURE 5 illustrates aircraft G-forces experienced during the recovery maneuver.

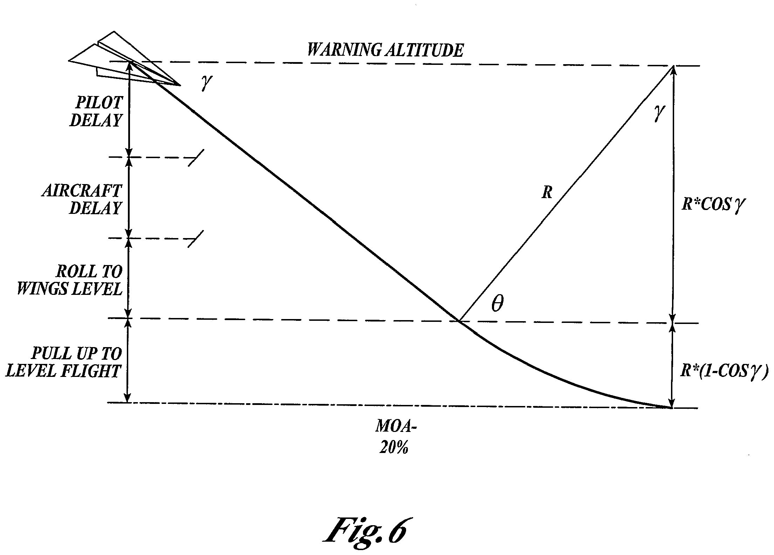

FIGURE 6 illustrates an example alerting algorithm that augments a look ahead calculation that is performed by the warning system 20. A warning light is illuminated and an audible warning "Pull Up" is outputted when the warning system 22 determines that the aircraft is at a point set to whatever the desired g limit is for a recovery maneuver. The recovery maneuver is such to prevent the aircraft from going below a Minimum Operating Altitude (MOA) by a fraction of .2 or 20%.

The look ahead calculation is based on the sum of four separate altitude loss elements:
1) Pilot Response: Descent Rate times the time it takes a pilot to initiate corrective action after warning
2) Aircraft Response: Descent Rate times the time it takes the aircraft to respond to the pilot's control input
3) Roll to Wings Level: Descent Rate times the absolute value of Roll Attitude/Roll Rate Constant
4) Pull Up to Level Flight: Altitude lost with constant g maneuver until level flight (1.6g).

The Pull Up to Level Flight element is based on the equation for centripetal acceleration in circular motion, a = V²/R. Where V is the speed and R is the Radius of the circle. In a dive recovery, function V is ground speed and "a" is the number of G's in the pull up maneuver. The altitude lost during the pull up is calculated based on the Descent Rate and Ground Speed. Flight Path Angle (γ) is determined by Descent Rate/Ground Speed (both scaled to feet and seconds, answer is in radians). The radius (R) is calculated from centripetal acceleration as R= Ground Speed²/1.6g's. The amount of altitude lost from the current vertical position is calculated relative to the vertical position of the center rotation. The aircraft's vertical distance from the center of rotation at the start of the pull up is R * Sin (θ). Since θ = 90° - y, this distance is also R*Cos (γ). The altitude lost is the difference between R and R*Cos (γ), or R*(1 - Cos (γ)). Substituting for R, the final calculation (ignoring unit conversions) for altitude lost during the pull up is equal to (Ground Speed2*(1- Cos (γ))/1.6g's.

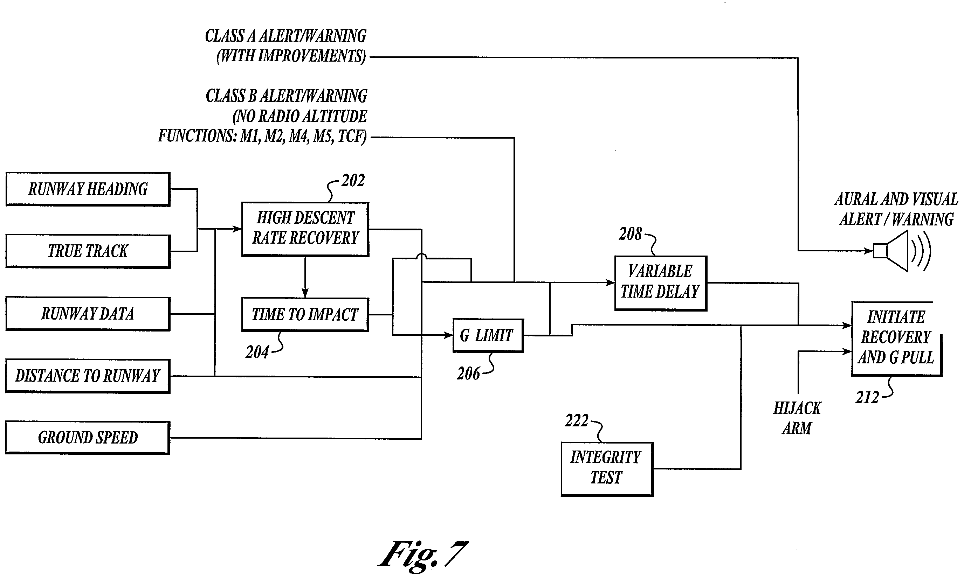

FIGURE 7 illustrates another auto-recovery method 200 that includes a high integrity test in order for auto-recovery to be initiated. At block 202, a high descent rate recovery is determined based on runway heading information, true-track information, runway data, and distance to runway information. The result of the high descent rate recovery determination is inserted into a block 204 where time to impact is calculated. The high descent rate recovery result, time to impact result, the distance to runway information, and ground speed are sent to a G-force calculator at a block 206 to determine if the recovery meets with predefined G-force limits (e.g. >15cm (nautical miles) = 1.16; 15 to 5nM = 1.156; <5nM = 1.25G). At block 208, a variable time delay is initiated upon the reception of a Class-B alert/warning, a result of the high descent rate recovery determination, the time to impact result, and the determined G-force limit. The Class-B alert/warning is generated by a ground proximity warning system that does not include Modes 1, 2, 4, or 5 and does not include terrain clearance floor (TCF) - the warning system only includes a look ahead algorithm, a dive recovery algorithm, and a height above field envelope. The results of block 208 and block 206 are sent to block 212 to determine if a recovery should occur.

An autorecovery occurs if an alert or warning is produced and the necessary time delay has occurred and the warning system 20 generates a positive signal from a system integrity test, see block 222. In another embodiment, a hijack arm (switch) must be activated in order for autorecovery to occur. Activation of the hijack arm cause the transponder to transmit a distress or hijack code.

The auto-recovery system 24 may also generate flight control signals that are sent to flight control actuators, a stick-pusher, or other devices that control motion of the aircraft. The stick-pusher is a device that is coupled to the control stick of the aircraft for controlling position of the control stick.

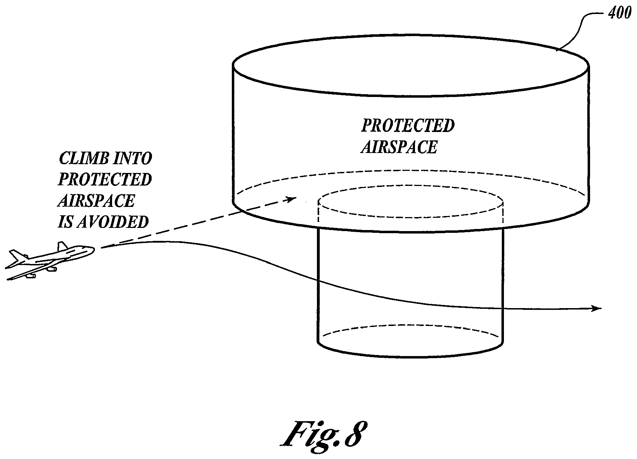

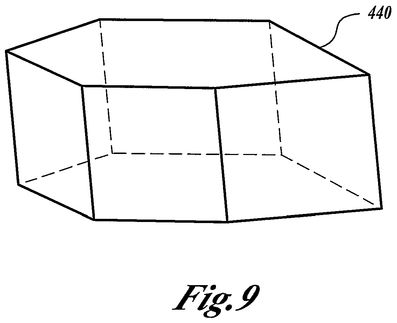

The auto-recovery system 24 may include software or a combination of hardware and software that execute protected airspace alerting algorithms and maneuver algorithms. Protected Airspace may be represented by a series of vertical cylinders (see FIGURE 8), by polygons (see FIGURE 9), or by a combination according to the particular type of airspace. The cylindrical type of airspace, such as airspace 400 shown in FIGURE 8, may be represented in the database 32 by the following parameters:
- Latitude of center point
- Longitude of center point
- Number of layers
- Radius of each layer
- Ceiling elevation of each layer

The polygonal type of airspace, such as airspace 440 shown in FIGURE 9, may be represented in the database 32 by the following parameters:
- Number of vertices
- Latitude of each vertex
- Longitude of each vertex
- Ceiling elevation

As shown in FIGURE 10, a complex polygonal airspace 450, may be represented by a series of simple convex polygons.

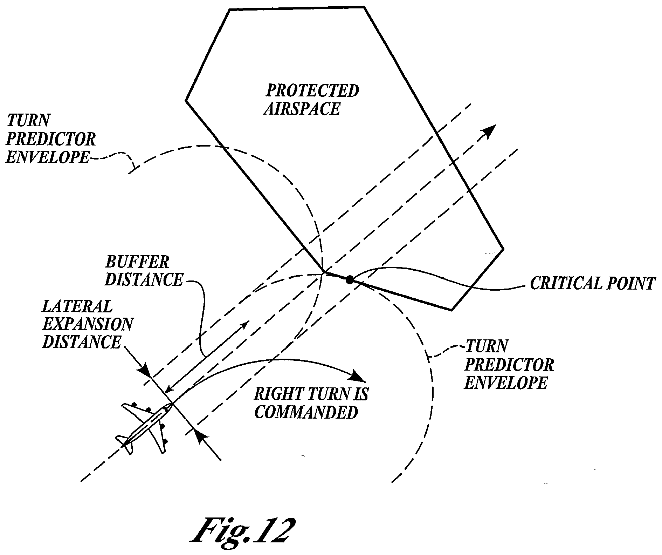

In one embodiment the alerting algorithms of a protected airspace avoidance component at the auto-recovery system 24 include various aspects. For example, the recovery system 24 searches the database 32 for protected airspace volumes, which are within a lateral area ± 30° of the current track of the airplane. The lateral area degree value may be degree values other than 30°. For each of these nearby protected airspace volumes, recovery system 24 computes the coordinates (latitude and longitude) of an envelope which represents the nearest the airplane can approach, assuming it maintains its present track, and avoid the airspace by making a turn (at present airspeed and at 30° of bank angle) in the most favorable direction (see examples shown in FIGURES 11 and 12). The Alerting Envelopes are calculated by predicting the path that the airplane would take if it continued on its present heading for a time of 30 seconds, and then executed either a left or right turn at 30°, of bank at the present airspeed. The initiation points of the turns are set at a 'lateral expansion distance' to either side of the airplane position (see the 'turn predictor, envelopes' in FIGURES 11 and 12). The alert is given when both left and right turn envelopes intrude into the airspace volume. For each airspace volume, using the known climb performance of the airplane, the ability of the airplane to climb above the volume is calculated, assuming that the climb is initiated at the boundary of the envelope computed in the previous step.

The commands to the pilot can be aural messages (e.g. "Turn Left", "Climb" "Turn Left and Climb"), supplemented by visual display of these messages on the flight instrument displays. The system also calculates the aircraft heading and altitude, which are required to clear the airspace volume, and these values may be sent to flight director, Head-Up Display or the automatic pilot.

FIGURE 13 illustrates a system 500 that includes an EGPWS 510 that includes a database 520, an alerting algorithm component 522, and a maneuvering algorithm component 524. The database 520 includes geographic locations and horizontal and vertical extents of local protected airspace. The EGPWS 510 interfaces with airplane systems 530, 532 and 534 to provide knowledge of the airplane position (latitude, longitude, altitude), horizontal velocity, vertical velocity (or flight path angle) and track angle. Additionally, if guidance commands are desired, knowledge of airplane pitch attitude, roll attitude and heading may be required.

The alerting algorithm component 522 determines if the airplane is predicted to encroach on any protected airspace volume. The EGPWS 510 includes an aural message generator that provides audible information to the pilot after the alerting algorithm component 522 determined that there is imminent conflict with a protected airspace. The maneuvering algorithm component 524 generates guidance commands for output to the pilot or an automatic flight control system 540 for avoiding the protected airspace.

The present invention may be configured to allow a pilot to take control of the aircraft any time during an auto-recovery.

## Claims

1. An aircraft auto recovery method comprising:
receiving one of a caution alert or a warning alert from a warning system; waiting a predefined period of time for positive flight control input by the flight crew; and, the method **characterised by**:
initiating auto-recovery if no positive flight control input has been performed at time of expiration of the waiting period, wherein initiating auto-recovery includes increasing flight path angle by 2° if a caution alert is received, wherein initiating auto-recovery includes increasing flight path angle by an additional 2° if the caution alert remains after expiration of an additional waiting period.

2. The method of Claim 1, wherein initiating auto-recovery includes increasing flight path angle by 6° if a warning alert is received.

3. The method of Claim 1, wherein initiating auto-recovery includes analyzing two or more auto-recovery routes relative to one or more of a terrain database, an airport database, an obstacles database, or a special-use airspace database, wherein analyzing possible recovery routes includes:
selecting the first analyzed route that is determined to clear the caution or warning alert.

4. The method of Claim 1, wherein initiating auto-recovery includes sending flight instructions to at least one of an autopilot system, a fly-by-wire system, flight control actuators or a stick-pusher.

5. A system for performing auto-recovery for an aircraft, the system comprising:
aircraft position and information systems (26, 30);
an automatic flight control system (36, 40);
memory (32) comprising terrain data, airport data, obstacle data, protected airspace data and an auto-recovery computer program; and
a processor (24) coupled to the memory, the position and information systems, and the automatic flight control system,
wherein the processor is configured to execute the auto-recovery computer program and **characterised in that** the auto recovery computer program is configured to carry out the method of any of claims numeral 1 to 4.

6. The system of Claim 5, wherein the automatic flight control system includes at least one of an autopilot system, a fly-by-wire system, flight control actuators or a stick-pusher.

## Patentansprüche

1. Verfahren für automatisches Abfangen eines Luftfahrzeugs, umfassend:
Empfangen eines eines Achtungsalarms oder eines Warnalarms von einem Warnsystem;
Warten, eine im Voraus definierte Zeitperiode, auf positive Flugsteuerungseingabe durch die Flugbesatzung; und das Verfahren **gekennzeichnet durch**:
Einleiten des automatischen Abfangens, wenn zum Zeitpunkt des Ablaufs der Warteperiode keine positive Flugsteuerungseingabe durchgeführt wurde, wobei Einleiten des automatischen Abfangens enthält, den Flugwegwinkel um 2° zu vergrößern, wenn ein Achtungsalarm empfangen wird, wobei Einleiten des automatischen Abfangens enthält, den Flugwegwinkel um zusätzliche 2° zu vergrößern, wenn der Achtungsalarm nach Ablauf einer zusätzlichen Warteperiode verbleibt.

2. Verfahren nach Anspruch 1, wobei Einleiten des automatischen Abfangens enthält, den Flugwegwinkel um 6° zu vergrößern, wenn ein Warnalarm empfangen wird.

3. Verfahren nach Anspruch 1, wobei Einleiten des automatischen Abfangens enthält, zwei oder mehr Routen für automatisches Abfangen relativ zu einer oder mehreren einer Geländedatenbank, einer Flughafendatenbank, einer Hindernisdatenbank oder einer Datenbank für Luftraum zur besonderen Nutzung zu analysieren, wobei Analysieren möglicher Routen für das Abfangen enthält:
Auswählen der ersten analysierten Route, die zum Aufheben des Achtungs- oder Warnalarms bestimmt wird.

4. Verfahren nach Anspruch 1, wobei Einleiten des automatischen Abfangens enthält, Fluganweisungen an mindestens eines eines Autopilotsystems, eines Fly-by-wire-Systems, von Flugsteuerung-Betätigungselementen oder eines Stick-Pushers zu senden.

5. System zum Durchführen von automatischem Abfangen für ein Luftfahrzeug, das System umfassend:
Luftfahrzeug-Positions- und Informationssysteme (26, 30);
ein System für automatische Flugsteuerung (36, 40) ;
Speicher (32), umfassend Geländedaten, Flughafendaten, Hindernisdaten, Daten über Luftraum zur besonderen Nutzung und ein Computerprogramm für automatisches Abfangen; und
einen Prozessor (24), gekoppelt an den Speicher, die Positions- und Informationssysteme und das System für automatische Flugsteuerung,
wobei der Prozessor konfiguriert ist, das Computerprogramm für automatisches Abfangen auszuführen, und
**dadurch gekennzeichnet, dass**
das Computerprogramm für automatisches Abfangen konfiguriert ist, das Verfahren nach einem der Ansprüche Nummer 1 bis 4 auszuführen.

6. System nach Anspruch 5, wobei das System für automatische Flugsteuerung mindestens eines eines Autopilotsystems, eines Fly-by-wire-Systems, von Flugsteuerung-Betätigungselementen oder eines Stick-Pushers enthält.

## Revendications

1. Procédé de rétablissement automatique pour aéronef, comprenant les étapes suivantes :
réception d'une alerte de mise en garde ou bien d'une alerte d'avertissement depuis un système d'avertissement ;
attente, pendant une période de temps prédéfinie, d'une manipulation de commandes de vol positive par l'équipage de conduite ; et le procédé étant **caractérisé par** l'étape suivante :
déclenchement d'un rétablissement automatique si aucune manipulation de commandes de vol positive n'a été effectuée à l'expiration de la période d'attente, l'étape de déclenchement d'un rétablissement automatique comportant l'étape d'accroissement de l'angle de trajectoire de vol de 2° en cas de réception d'une alerte de mise en garde, l'étape de déclenchement d'un rétablissement automatique comportant l'étape d'accroissement de l'angle de trajectoire de vol de 2° supplémentaires si l'alerte de mise en garde persiste suite à l'expiration d'une période d'attente supplémentaire.

2. Procédé selon la revendication 1, dans lequel l'étape de déclenchement d'un rétablissement automatique comporte l'étape d'accroissement de l'angle de trajectoire de vol de 6° en cas de réception d'une alerte d'avertissement.

3. Procédé selon la revendication 1, dans lequel l'étape de déclenchement d'un rétablissement automatique comporte l'étape d'analyse d'au moins deux routes de rétablissement automatique par rapport à une base de données de terrains et/ou une base de données d'aéroports et/ou une base de données d'obstacles et/ou une base de données d'espaces aériens à usage spécial, l'étape d'analyse de routes de rétablissement possibles comportant l'étape suivante :
sélection de la première route analysée dont il est établi qu'elle annulera l'alerte de mise en garde ou d'avertissement.

4. Procédé selon la revendication 1, dans lequel l'étape de déclenchement d'un rétablissement automatique comporte l'étape de transmission d'instructions de vol à un système de pilotage automatique et/ou un système de commandes de vol électriques et/ou des actionneurs de commandes de vol et/ou un pousseur de manche.

5. Système de mise en oeuvre d'un rétablissement automatique pour un aéronef, le système comprenant :
des systèmes de position et d'informations d'aéronef (26, 30) ;
un système de commandes automatiques de vol (36, 40) ;
une mémoire (32) comprenant des données de terrains, des données d'aéroports, des données d'obstacles, des données d'espaces aériens protégés et un programme d'ordinateur de rétablissement automatique ; et
un processeur (24) relié à la mémoire, aux systèmes de position et d'informations et au système de commandes automatiques de vol,
le processeur étant configuré pour exécuter le programme d'ordinateur de rétablissement automatique, et
le système étant **caractérisé en ce que**
le programme d'ordinateur de rétablissement automatique est configuré pour accomplir le procédé selon l'une quelconque des revendications numérotées de 1 à 4.

6. Système selon la revendication 5, dans lequel le système de commandes automatiques de vol comporte un système de pilotage automatique et/ou un système de commandes de vol électriques et/ou des actionneurs de commandes de vol et/ou un pousseur de manche.
